# EUROPÄISCHE PATENTSCHRIFT

(11) **EP 2 859 529 B1**
(45) Veröffentlichungstag und Bekanntmachung des Hinweises auf die Patenterteilung: **26.09.2018**
(21) Anmeldenummer: 13728965.8
(22) Anmeldetag: 06.06.2013
(51) Int. Cl.: G06T 7/11

(54) **BLOB-ENCODING**
BLOB-ENCODING
CODAGE DE BLOBS

(30) Priorität: 08.06.2012 AT 6612012
(43) Veröffentlichungstag der Anmeldung: 15.04.2015
(73) Patentinhaber: Giesecke+Devrient Currency Technology GmbH, 81677 München (DE)
(72) Erfinder: MAYER, Konrad, 1230 Wien (AT); SOUKUP, Daniel, 1020 Wien (AT)
(86) Internationale Anmeldenummer: PCT/EP2013/001668
(87) Internationale Veröffentlichungsnummer: WO 2013/182313

(56) Entgegenhaltungen:
- EP-A1- 1 783 688
- EP-A2- 0 216 158
- US-A- 5 199 083
- CHEN K-H ET AL: "Vision-based obstacle detection and avoidance for autonomous land vehicle navigation in outdoor roads", AUTOMATION IN CONSTRUCTION, ELSEVIER SCIENCE PUBLISHERS, AMSTERDAM, NL, Bd. 10, Nr. 1, 1. November 2000 (2000-11-01), Seiten 1-25, XP004217659, ISSN: 0926-5805, DOI: 10.1016/S0926-5805(99)00010-2
- HE L ET AL: "Fast connected-component labeling", PATTERN RECOGNITION, ELSEVIER, GB, Bd. 42, Nr. 9, 1. September 2009 (2009-09-01), Seiten 1977-1987, XP026148586, ISSN: 0031-3203, DOI: 10.1016/J.PATCOG.2008.10.013 [gefunden am 2008-10-30] in der Anmeldung erwähnt
- FENGHAO M ET AL: "Automatic extraction of human facial features", SIGNAL PROCESSING. IMAGE COMMUNICATION, ELSEVIER SCIENCE PUBLISHERS, AMSTERDAM, NL, vol. 8, no. 4, 1 May 1996 (1996-05-01), pages 309-326, XP004047059, ISSN: 0923-5965, DOI: 10.1016/0923-5965(95)00056-9

## Beschreibung

Die Erfindung betrifft ein Verfahren zur Identifikation von räumlich ausgedehnten und nicht pixelweise zusammenhängenden Bildmerkmalen in Digitalbildern gemäß dem Patentanspruch 1.

Hintergrund der Erfindung ist der Prozess der Druckbildinspektion, bei dem typischerweise vorab ein Referenzbild erstellt und dieses mit einem Digitalbild eines Druckwerkes verglichen wird. Durch Vergleich dieser beiden Bilder wird ein Abweichungsbild hergestellt, dessen Pixeln die Differenz zwischen den jeweiligen Helligkeitswerten der jeweils entsprechenden Pixel des Referenzbildes und des Bildes des Druckwerkes als Helligkeitswerte zugewiesen sind. Das jeweilige Abweichungsbild ist bei bekannten Verfahren gemäß dem Stand der Technik jeweils ein Graustufenbild, dessen Pixel den jeweiligen Farb- oder Helligkeitsunterschied zwischen dem Digitalbild des zu prüfenden Druckwerkes und dem Referenzbild angibt. Pixel des Abweichungsbildes, die keine Abweichungen aufweisen, werden im Folgenden als Hintergrundpixel bezeichnet. Pixel, deren jeweils zugewiesene Abweichungswerte einen vorgegebenen Schwellenwert übersteigen, werden im Folgenden als Vordergrundpixel bezeichnet. Gruppen von zusammenhängenden Vordergrundpixeln werden im Stand der Technik Merkmale, Blobs oder Connected Components genannt. Hierbei handelt es sich um räumlich ausgedehnte und zusammenhängende Bildmerkmale.

Aus dem Stand der Technik ist eine Vielzahl von Algorithmen zum Auffinden von Blobs, auch Blob-Encoding-Algorithmen genannt, bekannt, die aus vorgegebenen Bildern, insbesondere aus vorstehend genannten Abweichungsbildern, Informationen über den Zusammenhang unmittelbar benachbarter Vordergrundpixel, ermitteln. Diese Algorithmen werden im Stand der Technik auch als Blob- oder Connected-Components-Analyse, Blob- oder Connected-Components-Labeling oder -Coloring bezeichnet. Typische Verfahren dieser Art sind beispielsweise in Rosenfeld A. und Pfaltz J. L., "Sequential Operations in Digital Picture Processing", Journal of the ACM. - 1966. - S. 471-494, Di Stefano L. und Bulgarelli A., "A simple and efficient connected components labeling algorithm", 10th International Conference on Image Analysis and Processing. - 1999, He Lifeng [et al.], "Fast connected-component labeling", Pattern Recognition. - 2009. - S. 1977-1987, Chang Fu und Chen Chun-Jen, "A Component-Labeling Algorithm Using Contour Tracing Technique", Proceedings of the Seventh International Conference on Document Analysis and Recognition (ICDAR'03). - [s.l.] : IEEE, 2003) beschrieben.

Aus dem Stand der Technik ist bekannt, Blobs als Gruppen zusammenhängender Vordergrundpixel zu detektieren. Zwei Pixel gelten in diesem Sinne als zusammenhängend, wenn es einen Weg zwischen ihnen gibt, der ausschließlich aus Vordergrundpixeln besteht. Als möglicher Weg kommen lediglich Wege in Frage, die zwischen einem Pixel und seinen benachbarten Vordergrundpixeln innerhalb von Vierer-Nachbarschaften oder Achter-Nachbarschaften verlaufen, wobei typischerweise die Achter-Nachbarschaft verwendet wird.

Als Vierer-Nachbarschaft wird diejenige Umgebung eines Pixels bezeichnet, die das obere, unter, rechte und linke Nachbarpixel des jeweiligen Pixels umfasst. Als Achter-Nachbarschaft wird eine Umgebung rund um das Pixel bezeichnet, die das obere, untere, rechte, linke sowie sämtliche Pixel umfasst, die mit dem jeweiligen Pixel an einer Ecke zusammentreffen, d.h. die Achter-Nachbarschaft umfasst weiters auch diejenigen Pixel, das oberhalb und unterhalb des rechten sowie oberhalb und unterhalb des linken Nachbarpixels liegen.

Auftretende Ansammlungen von zusammenhängenden Vordergrundpixeln können mit Mitteln des Standes der Technik als gemeinsames, zusammenhängendes Bildmerkmal detektiert werden. Anschließend kann anhand der Lage der einzelnen Bildmerkmale im Abweichungsbild festgestellt werden, ob und allenfalls welcher konkrete Fehlerwert im Druck aufgetreten ist. Die Ursache bzw. Herkunft des Fehlers kann aufgrund der Form und Ausprägung des detektierten Merkmales bzw. Blobs nicht automatisiert ermittelt werden und bedarf üblicherweise der visuellen Nachkontrolle durch einen Experten.

Es zeigt sich jedoch, dass Anhäufungen von kleinen, aber miteinander nicht zusammenhängenden und durch Hintergrundpixel getrennten Blobs auf ähnliche Effekte zurückzuführen sind, beispielsweise auf einen größeren, fleckartigen Druckeffekt, der über seine Fläche hinweg unterschiedlich stark ausgeprägt ist und nur in Teilbereichen zu Vordergrundpixeln im Abweichungsbild führt, d.h. dass Pixel bestehen, die keine Abweichung zum Referenzbild zeigen. Dadurch erscheint der fleckartige Druckeffekt als Gruppe einer Vielzahl von kleinen, voneinander getrennten Flecken, die mit herkömmlichen Blob-Encoding-Verfahren nicht als Einheit detektierbar sind. Es besteht somit lediglich die Möglichkeit diese einzelnen Teilflecken als solche zu detektieren, da die herkömmlichen Blob-Detektionsverfahren nur direkte Nachbarschaftsbeziehungen im Sinne einer Vierer- oder Achter-Nachbarschaft verwenden. Dadurch kann es vorkommen, dass jeder dieser auftretenden, kleinen Flecken von Vordergrundpixeln alleine nicht groß genug ist, um letztendlich eine Klassifikation als Druckfehler zu bewirken, der Druckfehler kann nicht als solcher erkannt werden.

Im Stand der Technik wird zum Teil zur Lösung dieser Aufgabe vorgeschlagen, die Auflösung des jeweiligen Bildes zu reduzieren, damit die von den einzelnen Pixeln abgebildeten Bereiche vergrößert werden und das in seiner Auflösung reduzierte Bild zusammenhängende fehlerhafte Bildmerkmale zeigt. Bei einem solchen Verfahren muss jedoch das zu analysierende Digitalbild zwingend verändert und verschlechtert werden, wodurch eine anschließende Vermessung der fehlerhaften Bildmerkmale mit Ungenauigkeiten behaftet ist. Zudem benötigt eine Vielzahl von Anwendungen das tatsächlich erstellte zu analysierende Digitalbild, um eine Vermessung der fehlerhaften Bildmerkmale durchzuführen. Solche Verfahren können mit einem in seiner Auflösung reduzierten Digitalbild nicht durchgeführt werden. Aus diesem Grund bringt die Veränderung des Digitalbildes, insbesondere die Verringerung der Auflösung des Abweichungsbildes, erhebliche Nachteile mit sich.

In Chen, K.-H. et al, "Vision-based obstacle detection and avoidance for autonomous land vehicle navigation in outdoor roads" (AUTOMATION IN CONSTRUCTION ELSEVIER SCIENCE PUBLISHERS, AMSTERDAM, NL, Bd. 10, Nr. 1, Seiten 1-25) wird ein effektiver Zugang zur Erkennung und Vermeidung von Hindernissen für die Navigation von autonomen Landfahrzeugen in einer Straßenumgebung vorgeschlagen, bei dem Computer Vision und Bildfolge-Techniken verwendet werden. Zur Erkennung von Objekten werden die Graustufenbilder segmentiert und in den segmentierten Bildern werden Kanten- bzw. Randpixel erkannt. Aus den Kanten- bzw. Randpixeln werden Formen gebildet, die sich durch Ermittlung von Konturabschnitten ergeben, die jeweils durch zusammenhängende Randpixel gebildet werden.

In EP 0 216 158 A2 sind ein Verfahren und eine Einrichtung zum Analysieren und Kennzeichnen von Bildelementen (Pixeln) in einem Raster-gescannten Bild beschrieben. Sie umfassen die Verwendung einer festen Pixelkennzeichnungsvorrangregel, die nahe Nachbar Rahmengrenzpixel berücksichtigt, die nicht im aktuell angesehen Teil des Bildes enthalten sind, indem der Kehrwert des Werts des aktuellen, zu kennzeichnenden Bildpixels anstelle undefinierter Grenzpixel außerhalb des betrachteten Bildausschnitt substituiert wird.

In EP 1 783 688 A1 ist ein Verfahren zum Erzeugen eines markierten Bildes beschrieben. Um Pixel zu identifizieren, die Bildelemente bilden, um ein markiertes Bild zu erzeugen, in welchem Pixel mit Identifikationsinformation markiert sind, wird ein Pixelblock mit vier in zwei Dimensionen zueinander benachbarte Pixeln als eine Einheit von Daten, einschließlich Bildpunkten eingegeben, die ein Bild bilden. Alle der on-Pixel, die der Gruppierung unterworfen werden und in dem Pixelblock enthalten sind, werden mit der gleichen Kennung versehen. Da die on- Pixel, die in einem Pixelblock enthalten sind, nacheinander verbunden sind, können solche Pixel mit der gleichen Kennung markiert werden, ohne berechnen zu müssen, ob solche Pixel verbunden sind.

Aufgabe der Erfindung ist es, die vorstehend genannten Nachteile zu überwinden und den fehlerhaften Druckeffekt als solchen zu erkennen.

Erfindungsgemäß ist ein Verfahren gemäß Anspruch 1 vorgesehen.

Hierdurch besteht der wesentliche erfindungsgemäße Vorteil, dass auch nicht pixelweise zusammenhängende und räumlich ausgedehnte Bildmerkmale, wie eingangs beschrieben, zusammengefasst werden können. Durch Anpassung der jeweiligen Umgebung um einzelne Pixel können unterschiedlich weit voneinander entfernte Teile von Bildmerkmalen zu gemeinsamen Bildmerkmalen zusammengefasst werden.

Ein besonderer Aspekt der Erfindung sieht vor, dass für den Fall, dass innerhalb der Umgebung des jeweiligen Pixels mehrere markierte Umgebungspixel mit unterschiedlichen Markierungen aufgefunden werden, die jeweiligen Markierungen als einander gleichwertig angesehen werden und die jeweiligen Pixel mit diesen Markierungen demselben Merkmal zugerechnet werden.. Hierdurch können einzelne Bildmerkmale, die im Zuge der Identifikation als zusammenhängend erkannt werden, zu gemeinsamen Bildmerkmalen zusammengefasst werden.

Um ein effizientes Suchen von bereits markierten Pixeln zu erreichen, kann vorgesehen sein, dass die jeweilige Umgebung aus einer Anzahl von relativ zum jeweiligen Pixel festgelegten Teilumgebungen zusammengesetzt wird, sofern die durch die Teilumgebungen festgelegten Umgebungspixel innerhalb des Digitalbilds liegen, wobei insbesondere außerhalb des Digitalbilds liegende Umgebungspixel nicht der jeweiligen Teilumgebung zugerechnet werden.

Hierbei kann zur Verbesserung der Geschwindigkeit des Auffindens von markierten Pixeln vorgesehen sein, dass die einzelnen Teilumgebungen des jeweiligen Pixels in einer vorgegebenen und für sämtliche Pixel gleichen Reihenfolge oder nach derselben Maßgabe auf das Vorliegen von markierten Pixeln durchsucht werden.

Eine besonders vorteilhafte und rechnerisch effiziente Gestaltung der Umgebung eines Pixels sieht vor, dass
a) eine erste Teilumgebung, die sämtliche Umgebungspixel aufweist, deren zweiter Koordinatenwert dem zweiten Koordinatenwert des jeweiligen Pixels entspricht und deren erster Koordinatenwert kleiner, höchstens jedoch um die vorgegebene erste Umgebungslänge kleiner ist als der erste Koordinatenwert des jeweiligen Pixels,
b) eine zweite Teilumgebung, die sämtliche Umgebungspixel aufweist, deren erster Koordinatenwert kleiner, höchstens jedoch um eine vorgegebene erste Umgebungslänge kleiner ist als der erste Koordinatenwert des jeweiligen Pixels, und deren zweiter Koordinatenwert kleiner, höchstens jedoch um die vorgegebene zweite Umgebungslänge kleiner ist als der zweite Koordinatenwert des jeweiligen Pixels,
c) eine dritte Teilumgebung, die sämtliche Umgebungspixel aufweist, deren erster Koordinatenwert dem ersten Koordinatenwert des jeweiligen Pixels entspricht und deren zweiter Koordinatenwert kleiner, höchstens jedoch um eine vorgegebene zweite Umgebungslänge kleiner ist als der zweite Koordinatenwert des jeweiligen Pixels, und
d) eine vierte Teilumgebung, die sämtliche Umgebungspixel aufweist, deren erster Koordinatenwert größer, höchstens jedoch um eine vorgegebene erste Umgebungslänge größer ist als der erste Koordinatenwert des jeweiligen Pixels, und deren zweiter Koordinatenwert kleiner, höchstens jedoch um eine vorgegebene zweite Umgebungslänge kleiner ist als der zweite Koordinatenwert des jeweiligen Pixels.

Hierbei kann zur Anpassung der Umgebung an die jeweils auftretenden Bildmerkmale vorgesehen sein, dass die erste Umgebungslänge und/oder zweite Umgebungslänge jeweils eine Länge von drei bis 20, insbesondere 5 bis 11, Pixelbreiten aufweisen, und/oder dass die erste Umgebungslänge und zweite Umgebungslänge gleich groß sind.

Um möglichst rasch und mit geringem numerischen Aufwand markierte Pixel im Bereich der Umgebung zu finden, kann vorgesehen sein, dass
a) zunächst die dritte Teilumgebung auf das Vorhandensein markierter Umgebungspixel durchsucht wird und sofern in der dritten Teilumgebung ein markiertes Umgebungspixel gefunden wird, die Markierung des markierten Umgebungspixels auf das jeweilige Pixel übernommen wird, andernfalls
b) die erste Teilumgebung auf das Vorhandensein markierter Umgebungspixel durchsucht wird und sofern in der ersten Teilumgebung ein markiertes Umgebungspixel gefunden wird,
   b1) die vierte Teilumgebung auf das Vorhandensein markierter Umgebungspixel durchsucht wird und sofern in der vierten Teilumgebung ein markiertes Umgebungspixel gefunden wird, die Markierung des markierten Umgebungspixels in der ersten oder vierten Teilumgebung auf das jeweilige Pixel übernommen wird und die Markierungen des in der ersten Teilumgebung aufgefundenen markierten Umgebungspixels und des in der vierten Teilumgebung aufgefundenen markierten Umgebungspixels aus gleichwertig angesehen werden,
      sofern hingegen in der vierten Teilumgebung kein markiertes Umgebungspixel aufgefunden werden konnte, die Markierung des markierten Umgebungspixels in der ersten Teilumgebung auf das jeweilige Pixel übernommen wird,
c) sofern hingegen in der ersten Teilumgebung kein markiertes Umgebungspixel gefunden wird, die zweite Teilumgebung auf das Vorhandensein markierter Umgebungspixel durchsucht wird und sofern in der zweiten Teilumgebung ein markiertes Umgebungspixel gefunden wird,
   c1) die vierte Teilumgebung auf das Vorhandensein markierter Umgebungspixel durchsucht wird und sofern in der vierten Teilumgebung ein markiertes Umgebungspixel gefunden wird, die Markierung des markierten Umgebungspixels in der zweiten oder vierten Teilumgebung auf das jeweilige Pixel übernommen wird und die Markierungen des in der zweiten Teilumgebung aufgefundenen markierten Umgebungspixels und des in der vierten Teilumgebung aufgefundenen markierten Umgebungspixels aus gleichwertig angesehen werden,
      sofern hingegen in der vierten Teilumgebung kein markiertes Umgebungspixel aufgefunden werden konnte, die Markierung des markierten Umgebungspixels in der zweiten Teilumgebung auf das jeweilige Pixel übernommen wird,
d) sofern hingegen in der zweiten Teilumgebung kein markiertes Umgebungspixel gefunden wird, die vierte Teilumgebung auf das Vorhandensein markierter Umgebungspixel durchsucht wird und sofern in der vierten Teilumgebung ein markiertes Umgebungspixel gefunden wird, die Markierung des markierten Umgebungspixels in der vierten Teilumgebung auf das jeweilige Pixel übernommen wird, andernfalls
e) dem jeweiligen Pixel eine neue, noch nicht für andere Pixel vergebene Markierung zugewiesen wird.

Ein besonders vorteilhafter Aspekt der Erfindung sieht vor, dass als zu untersuchendes Digitalbild ein Differenzbild zwischen zwei Digitalbildern herangezogen wird.

Durch dieses Vorgehen ist es möglich, ein ermitteltes Bild mit einem Referenzbild auf das Vorhandensein von Bildfehlern zu untersuchen und diese Bildmerkmale als Bildfehler zu identifizieren.
Ein besonders einfacher Vorbearbeitungsschritt sieht vor, dass das Digitalbild für jedes Pixel jeweils nur einen einzigen Helligkeits- oder Farbwert aufweist und dass bei der Überprüfung des Kriteriums verglichen wird, ob dieser Helligkeits- oder Farbwert einen vorgegebenen Schwellenwert übersteigt und/oder ob dieser Helligkeits- oder Farbwert einen vorgegebenen weiteren Schwellenwert unterschreitet.

Ein besonderes Ausführungsbeispiel der Erfindung wird anhand der folgenden Zeichnungsfiguren näher dargestellt.

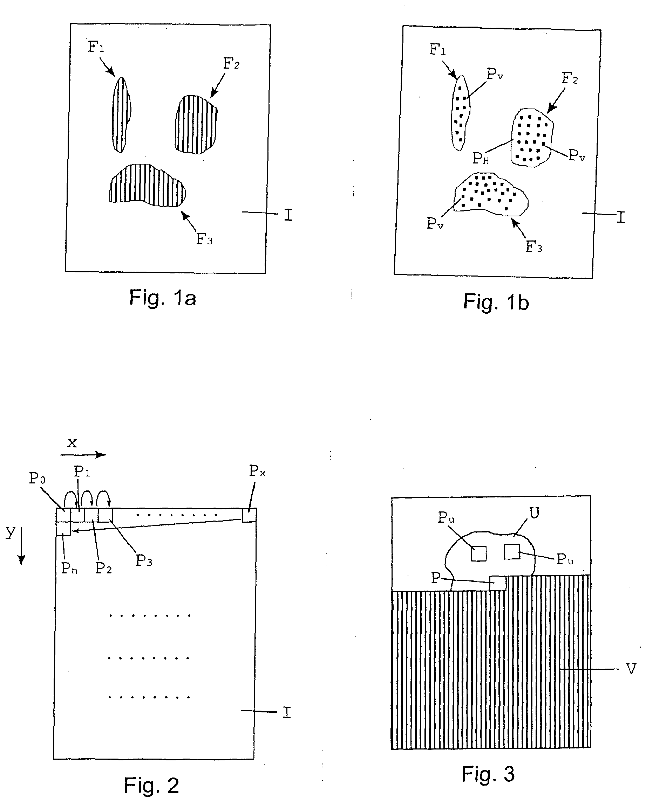

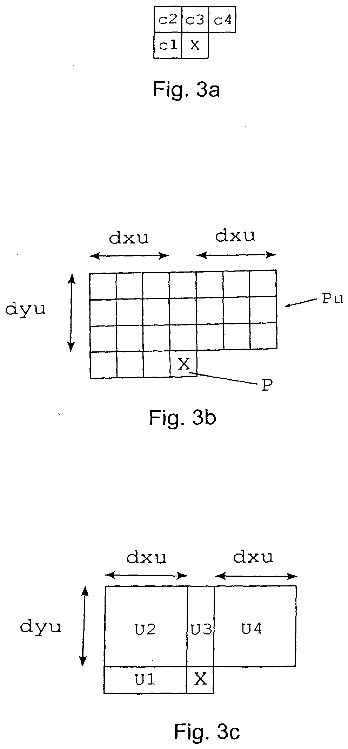

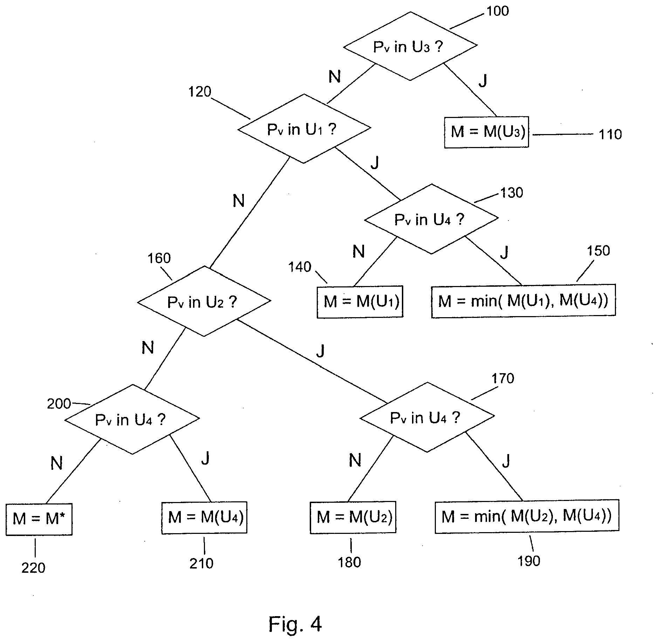

Fig. 1a zeigt ein zu untersuchendes, zweidimensionales Digitalbild in Form eines Abweichungsbildes. Fig. 1b zeigt die Vordergrundpixel des in Fig. 1a dargestellten Abweichungsbildes. Fig. 2 zeigt die Reihenfolge des regulären Scans, mit dem die einzelnen Pixel des Digitalbildes durchlaufen werden. Fig. 3 zeigt das Vorgehen bei der konkreten, erfindungsgemäßen Ausführungsform zur Erkennung von markierten Pixeln innerhalb einer Nachbarschaft. Fig. 3a zeigt ein Pixel mit einer Umgebung von vier angrenzenden Pixeln. Fig. 3b zeigt ein Pixel mit einer Umgebung von vierundzwanzig Pixeln. Fig. 3c zeigt die in Fig. 3b dargestellte Umgebung in vier Teilumgebungen unterteilt. Fig. 4 zeigt eine bevorzugte Vorgehensweise beim Durchsuchen der Umgebung eines Pixels.

Die Pixel P in dem in Fig. 1a dargestellten Digitalbild I sind rasterförmig in Form eines Rechteckgitters angeordnet, wobei das Digitalbild als Differenz eines Referenzbilds und eines aufgenommenen Bilds derselben Größe erstellt wird. Jedem Pixel P des Digitalbildes I sind jeweils zwei Koordinatenwerte x, y entsprechend ihrer Position im Rechteckgitter des Digitalbildes I zugewiesen. Die jeweiligen Koordinatenwerte x, y nebeneinanderliegender Pixel P unterscheiden sich jeweils um eine Pixelabmessung. In Fig. 1a ist ein typisches Digitalbild I dargestellt, das als Abweichungsbild durch Differenzbildung zwischen einem Referenzbild und dem Bild eines Druckwerkes erstellt wurde. Das Digitalbild I wird einer Analyse auf in ihm vorkommenden Bildmerkmalen F, auch Blobs genannt, unterzogen. In dem in Fig. 1a dargestellten Digitalbild I sind insgesamt drei Bildmerkmale F_{1,} F₂, F₃, die von Druckfehlern herrühren, dargestellt.

Bevor bei der Bildinspektion der Schritt des Blob-Encodings durchgeführt wird, wird zunächst jeweils durch Schwellenwertbildung für jedes der einzelnen Pixel P ermittelt, indem für das jeweilige Pixel P ein Kriterium überprüft wird, beispielsweise ob der in ihm gespeicherte Helligkeitswert einen vorgegebenen Schwellenwert überschreitet oder unterschreitet.

Erweist sich demgemäß eine Abweichung zwischen dem Helligkeitswerts eines Pixels des Referenzbilds und dem Helligkeitswert des entsprechenden Pixels des zu überprüfenden Bilds als derart gering, dass der Abweichungswert des Digitalbilds I einen vorgegeben Schwellenwert nicht überschreitet, so wird dieses Pixel P als Hintergrundpixel P_{H} markiert bzw. das Pixel wird nicht als Vordergrundpixel P_{V} für die weitere Blob-Analyse herangezogen. In diesem Digitalbild I sind die einzelnen Vordergrundpixel P_{V} entweder vorab markiert. Alternativ kann die Überprüfung und Identifikation der Vordergrundpixel Pv während des in Fig. 2 dargestellten Durchlaufs erfolgen.

In Fig. 1a sind diejenigen Pixel, bei denen der Betrag der Differenz der Farbwerte der beiden miteinander verglichenen Bilder annähernd 0 ist, weiß dargestellt. Je größer der Betrag dieser Differenz ist, desto dunkler ist das jeweilige Pixel P dargestellt. Es ergeben sich in Fig. 1a drei voneinander abgegrenzte Bildmerkmale F₁, F₂, F₃.

In Fig. 1b sind die Vordergrundpixel Pv im Digitalbild I als schwarze Punkte dargestellt. Die Vordergrundpixel P_{V} sind in Fig. 1b schwarz dargestellt. Ist das jeweilige Kriterium nicht erfüllt, so wird das jeweilige Pixel P als Hintergrundpixel P_{H} angesehen und weiß dargestellt. Die einzelnen, in Fig. 1a zusammenhängenden dargestellten Bildmerkmale F₁, F₂, F₃ sind in Fig. 1b nicht zusammenhängend. Es ist somit für diese Vordergrundpixel P_{V} nicht ohne Weiteres feststellbar, ob und wie diese gemeinsamen Bildmerkmalen F₁, F₂, F₃ zugehören.

In Fig. 2 ist dargestellt, wie die einzelnen Pixel P im Zuge eines regulären Scans der Reihe nach einzeln durchlaufen werden. Ausgehend von einem Startpixel P₀ mit dem kleinsten ersten Koordinatenwert x unter denjenigen Pixeln P mit dem kleinsten zweiten Koordinatenwert y wird sequenziell dasjenige Folgepixel Pₙ ausgewählt, dessen zweiter Koordinatenwert y ident ist und dessen erster Koordinatenwert x jeweils den nächsthöheren Wert annimmt. Im vorliegenden Fall gelangt man, ausgehen vom Startpixel P₀ zunächst zu einem ersten Pixel P₁, anschließend zu einem zweiten Pixel P₂ usw. bis man schließlich bei demjenigen Pixel Pₓ angelangt, für das kein Pixel zur Verfügung steht, das einen gleichen zweiten Koordinatenwert y aufweist und das einen höheren ersten Koordinatenwert x aufweist. In diesem Fall wird dasjenige Folgepixel Pₙ gewählt, das den kleinsten ersten Koordinatenwert x unter denjenigen Pixeln P aufweist, die den jeweils nächstgrößeren zweiten Koordinatenwert y aufweisen. Dieser Vorgang wird solange fortgesetzt, bis letztlich sämtliche Pixel P des Digitalbildes I durchlaufen wurden.

In Fig. 3 ist das konkrete Vorgehen zur Detektion von nicht pixelweise zusammenhängenden Bildmerkmalen F näher dargestellt. Ziel des Vorgehens ist es, sämtliche Vordergrundpixel P_{V} mit einer Markierung zu versehen, die demjenigen Bildmerkmal zugeordnet ist, dem die jeweiligen Vordergrundpixel P_{V} zugehören. Sobald man im Zuge des in Fig. 2 dargestellten regulären Scans auf ein Vordergrundpixel P_{V} trifft, so wird dieses Vordergrundpixel Pv als einem Bildmerkmal F₁, F₂, F₃ zugehörig angesehen. Es wird untersucht, ob sich in dessen Umgebung U bereits Vordergrundpixel P_{V} befinden, die bereits eine Markierung erhalten haben. Ist dies nicht der Fall, so wird dem jeweiligen Pixel eine Markierung zugeordnet, die sich von allen bereits ergebenen Markierungen unterscheidet.

Die Umgebung U wird so gewählt, dass ihr unter allen möglichen Pixeln P jedenfalls nur diejenigen Pixel P zugeordnet werden, die bereits auf markierte Umgebungspixel P_{U} in ihrer Umgebung U untersucht worden sind. Somit scheiden aufgrund des regulären Scans bzw. aufgrund der Reihenfolge, in der die einzelnen Pixel P sequenziell abgearbeitet werden, diejenigen Pixel P als Umgebungspixel P_{U} aus, die sich im Bereich V rechts oder in einer Zeile unterhalb des jeweiligen Pixels P befinden. Derartige Pixel werden der Umgebung U des jeweiligen Pixels P nicht zugeordnet und von dieser ausgeschlossen.

Sofern es sich beim jeweils durchlaufenen Pixel P um ein Vordergrundpixel P_{V} handelt, wird innerhalb der Umgebung U nach bereits markierten Umgebungspixeln P_{U} gesucht, wobei bei Vorliegen einer Mindestanzahl von markierten Umgebungspixeln P_{U} mit derselben Markierung innerhalb der Umgebung U dem jeweiligen Pixel dieselbe Markierung zugewiesen wird. Im vorliegenden Ausführungsbeispiel reicht es aus, wenn innerhalb der Umgebung U zumindest ein markiertes Umgebungspixel P_{U} aufgefunden wird, das bereits mit einer Markierung versehen ist. Dem jeweiligen Pixel P wird diese Markierung zugewiesen. Sofern innerhalb der Umgebung U kein einziges Umgebungspixel P_{U} aufgefunden werden kann, dem bereits eine Markierung zugewiesen worden ist, so wird dem jeweiligen Pixel eine neue, noch nicht vergebene Markierung zugewiesen.

Ist das gerade durchlaufene Pixel P ein Hintergrundpixel P_{H}, wird überhaupt keine Markierung vergeben und das nächste Pixel wird überprüft.

Im vorliegenden Fall wird zur Erkennung von nicht pixelweise zusammenhängenden Bildmerkmalen F die Umgebung U des jeweiligen Pixels P jedenfalls so gewählt, dass die Umgebung U zumindest ein Umgebungspixel P_{U} enthält, das sich in zumindest einem seiner Koordinatenwerte x, y vom jeweiligen Koordinatenwert x, y des Pixels P um zumindest zwei Pixelabmessungen unterscheidet. Somit werden der Umgebung U des jeweiligen Pixels P nicht bloß seine unmittelbaren Nachbarpixel im Sinne einer Vierer- oder Achter-Nachbarschaft (Fig. 3a) zugewiesen, sondern die Umgebung U des jeweiligen Pixels P wird größer gewählt.

Im vorliegenden Ausführungsbeispiel wurde eine Umgebung U, wie in Fig. 3b dargestellt, gewählt. Die Umgebung U des jeweiligen Pixels P in Fig. 3b umfasst sämtliche bereits untersuchte oder durchlaufene Pixel P, deren erster und zweiter Koordinatenwert x, y sich jeweils um höchstens 3 Pixelabmessungen vom jeweiligen Koordinatenwert x, y des Pixels P unterscheidet. Zur effizienteren Überprüfung auf markierte Pixel P innerhalb der Umgebung U wird die Umgebung U, wie in Fig. 3c dargestellt, in vier Teilumgebungen U₁, U₂, U₃, U₄ unterteilt.

Dabei wird die Form der Umgebung U für sämtliche Pixel P jeweils identisch festgelegt, die jeweilige Umgebung U ist aus einer Anzahl von relativ zum jeweiligen Pixel P festgelegten Umgebungspixeln P_{U} gleich zusammengesetzt. Eine einzige Ausnahme hiervon ergibt sich für Pixel P, die am Rand des Digitalbildes I liegen bzw. deren Umgebung U jeweils in dem Rand des Digitalbildes I hineinreicht, wobei einzelne Umgebungspixel P_{U} des jeweiligen Pixels P außerhalb des Digitalbildes I liegen. Für Pixel P, die sich ausreichend weit innerhalb des Digitalbildes I befinden, wird die jeweilige Umgebung U jeweils nach den gleichen geometrischen Kriterien erstellt; die Umgebung U solcher Pixel hat dieselbe Form und Größe. Im vorliegenden Ausführungsbeispiel umfasst die Umgebung U der Pixel P vier Teilumgebungen U₁, U₂, U₃, U₄, die jeweils für die ausreichend weit im Inneren des Digitalbildes I liegenden Pixel P unter Zugrundelegung jeweils derselben Kriterien erstellt werden. Hierbei werden jeweils zwei Umgebungslängen dxu, dyu vorgegeben, die die Größe der jeweiligen Umgebung U des Pixels P festlegen. Im vorliegenden Ausführungsbeispiel sind die beiden Umgebungslängen dxu, dyu gleichgroß und weisen jeweils den Wert von drei Pixelbreiten auf.

Die erste Teilumgebung U₁ weist sämtliche Umgebungspixel P_{U} auf, deren zweiter Koordinatenwert y dem zweiten Koordinatenwert y des jeweiligen Pixels P entspricht und deren erster Koordinatenwert x kleiner, höchstens jedoch um um die vorgegebene erste Umgebungslänge dxu kleiner ist, als der erste Koordinatenwert x des jeweiligen Pixels P. Die zweite Teilumgebung U₂ der Umgebung U weist sämtliche Umgebungspixel P_{U} auf, deren erster Koordinatenwert x kleiner, höchstens jedoch um eine vorgegebene erste Koordinatenlänge dxu kleiner ist als der erste Koordinatenwert x des jeweiligen Pixels P und deren zweiter Koordinatenwert y kleiner, höchstens jedoch um die vorgegebene zweite Umgebungslänge dyu kleiner ist als der zweite Koordinatenwert y des jeweiligen Pixels P. Weiters weist die Umgebung U des Pixels P eine dritte Teilumgebung U₃ auf, die sämtliche Umgebungspixel P_{U} aufweist, deren erster Koordinatenwert x dem ersten Koordinadenwert x des jeweiligen Pixels P entspricht und deren zweiter Koordinatenwert y kleiner, höchstens jedoch um die zweite Umgebungslänge dyu kleiner ist, als der zweite Koordinatenwert y des jeweiligen Pixels P. Weiters weist die Umgebung U eine vierte Teilumgebung U₄ auf, die sämtliche Umgebungspixel P_{U} aufweist, deren erster Koordinatenwert x größer, höchstens jedoch um eine vorgegebene erste Umgebungslänge dxu größer ist als der erste Koordinadenwert x des jeweiligen Pixels P und deren zweiter Koordinatenwert y kleiner, höchstens jedoch um eine vorgegebene zweite Umgebungslänge dyu kleiner ist, als der zweite Koordinatenwert y des jeweiligen Pixels P.

Im vorliegenden Ausführungsbeispiel umfasst die Umgebung U insgesamt 24 Pixel in vier Teilumgebungen U₁, U₂, U₃, U₄. Die einzelnen Teilumgebungen U₁ ..., U₄ des jeweiligen Pixels P werden für sämtliche Pixel in derselben Reihenfolge und nach derselben Maßgabe auf das Vorliegen von markierten Pixeln durchsucht. Hierbei kommen aus der Literatur für Umgebungen U, wie in Fig. 3a dargestellt, unterschiedliche Nachbarschaftsanalyseverfahren zur Anwendung. Es ist Ziel solcher Optimierungsstrategien, nur so viele Punkte zu prüfen, wie zur Ermittlung einer für das jeweilige Pixel P korrekten Markierung unbedingt erforderlich sind. In Fig. 4 ist eine konkrete Weiterentwicklung des Algorithmus nach He He Lifeng [et al.], "Fast connected-component labeling", Pattern Recognition. - 2009. - S. 1977-1987, dargestellt, der auf einer in Fig. 3a dargestellten Umgebungsdefinition beruht. Anstelle der einzelnen, zu untersuchenden Pixel C₁, C₂, C₃, C₄ in Fig. 3a werden jeweils die Teilumgebungen U₁, U₂, U₃, U₄ auf das Vorhandensein von Markierungen untersucht.

Dieser angepasste Algorithmus ist in Fig. 4 in Form eines Entscheidungsbaums dargestellt. In den jeweiligen im Entscheidungsbaum der Fig. 4 dargestellten Knoten wird untersucht, ob innerhalb der vorgegebenen Teilumgebung ein Vordergrundpixel aufgefunden werden kann (Schritt 100). Ist ein Vordergrundpixel P_{V} in der dritten Teilumgebung U₃ enthalten, so wird das Pixel mit derjenigen Markierung versehen, mit der das in der dritten Teilumgebung U₃ enthaltene Vordergrundpixel P_{V} versehen ist (Schritt 110). Sofern in der dritten Teilumgebung U₃ des Pixels P kein Vordergrundpixel Pv aufgefunden werden konnte, wird nunmehr in der ersten Teilumgebung U₁ nach Vordergrundpixeln P_{V} gesucht (Schritt 120). Kann innerhalb der ersten Teilumgebung U₁ ein markiertes Vordergrundpixel P_{V} aufgefunden werden, so wird (Schritt 130) in weiterer Folge untersucht, ob sich auch innerhalb der vierten Teilumgebung U₄ ein Vordergrundpixel P_{V} befindet. Ist dies nicht der Fall, so wird dem jeweiligen Pixel die Markierung desjenigen Vordergrundpixels Pv zugewiesen, das in der ersten Teilumgebung U₁ aufgefunden wurde (Schritt 140). Kann hingegen sowohl in der ersten Teilumgebung U₁ als auch in der vierten Teilumgebung U₄ jeweils ein Vordergrundpixel P_{V} aufgefunden werden, so wird dem jeweiligen Pixel die jeweils zahlenmäßig kleinere Markierung zugewiesen, das heißt, dass für den Fall, dass die Markierung des in der ersten Teilumgebung U₁ befindlichen Vordergrundpixels Pv kleiner ist als die Markierung des in der vierten Teilumgebung U₄ befindlichen Vordergrundpixels Pv, dem jeweiligen Pixel die Markierung des in der ersten Teilumgebung U₁ befindlichen Pixels zugewiesen wird, andernfalls diesem Pixel die Markierung des in der vierten Teilumgebung befindlichen Vordergrundpixels P_{V} zugewiesen wird (Schritt 150).

Sofern weder in der dritten Teilumgebung U₃ noch in der ersten Teilumgebung U₁ ein Vordergrundpixel Pv aufgefunden werden kann, wird überprüft, ob in der zweiten Teilumgebung U₂ ein Vordergrundpixel vorhanden ist (Schritt 160). Ist dies der Fall, so wird in weiterer Folge auch überprüft, ob in der vierten Teilumgebung U₄ ein Vordergrundpixel aufgefunden werden kann (Schritt 170). Ist dies nicht der Fall, so wird dem jeweiligen Pixel die Markierung desjenigen Vordergrundpixels P_{V} zugewiesen, das in der zweiten Teilumgebung U₂ aufgefunden wurde (Schritt 180). Kann hingegen sowohl in der zweiten Teilumgebung U₂ als auch in der vierten Teilumgebung U₄ jeweils ein Vordergrundpixel aufgefunden werden, so wird dem jeweiligen Pixel die jeweils zahlenmäßig kleinere Markierung zugewiesen, das heißt, dass für den Fall, dass die Markierung des in der zweiten Teilumgebung U₂ befindlichen Vordergrundpixels P_{V} kleiner ist als die Markierung des in der vierten Teilumgebung U₄ befindlichen Vordergrundpixels P_{V}, dem jeweiligen Pixel die Markierung des in der zweiten Teilumgebung U₂ befindlichen Pixels zugewiesen wird, andernfalls diesem Pixel die Markierung des in der vierten Teilumgebung befindlichen Vordergrundpixels zugewiesen wird (Schritt 190).

Sofern bei der Prüfung auf vorhandene Vordergrundpixel P_{V} innerhalb der Teilumgebung U₂ im Schritt 160 keine Vordergrundpixel P_{V} aufgefunden werden können, wird in weiterer Folge überprüft, ob innerhalb der vierten Teilumgebung U₄ Vordergrundpixel P_{V} vorhanden sind (Schritt 200). Ist dies der Fall, so wird dem jeweiligen Pixel die Markierung des Vordergrundpixels P_{V} zugewiesen, das in der Teilumgebung U₄ aufgefunden wurde (Schritt 210). Kann hingegen auch in der vierten Teilumgebung U₄ kein Vordergrundpixel P_{V} aufgefunden werden, ist davon auszugehen, dass das zu untersuchende Pixel keinem bislang bekannten Merkmal zugehört und deshalb mit einer neuen, noch nicht vergebenen Markierung versehen werden soll. Typischerweise werden hierfür Markierungen gewählt, die mit einer begrenzten Zahl beginnen, als kleinste Zahl kann beispielsweise die Zahl 1 verwendet werden. Sofern, wie im Schritt 220 dargestellt, keine bereits markierten Vordergrundpixel P_{V} innerhalb der Umgebung des jeweiligen Pixels aufgefunden werden können, wird dem jeweiligen Pixel jeweils eine Markierung zugeordnet, die um 1 höher ist als die bislang vergebene höchste Markierung.

Sofern innerhalb der Umgebung in den Schritten 150 oder 190 zwei Vordergrundpixel P_{V} mit jeweils unterschiedlicher Markierung aufgefunden werden, so werden die Markierungen als einander jeweils äquivalent betrachtet. Sämtliche Pixel, denen einander äquivalente Markierungen zugeordnet sind, werden als Pixel ein- und desselben Bildmerkmals F angesehen.

## Patentansprüche

1. Verfahren zur Identifikation von räumlich ausgedehnten und nicht pixelweise zusammenhängenden Bildmerkmalen (F) in einem zu untersuchenden zweidimensionalen Digitalbild (I) mit rasterförmig in Form eines Rechteckgitters angeordneten Pixeln (P), wobei jedem Pixel (P) des zweidimensionalen Digitalbilds (I) jeweils zwei Koordinatenwerte (x, y) entsprechend ihrer Position im Rechteckgitter des Digitalbilds (I) zugewiesen werden, und die jeweiligen Koordinatenwerte (x, y) nebeneinander liegender Pixel (P) sich jeweils um eine Pixelabmessung unterscheiden,
- wobei die einzelnen Pixel (P) in der Reihenfolge eines regulären Scans durchlaufen werden, bei dem nacheinander Pixel aufeinanderfolgender Zeilen des Rechteckgitters derart in Richtung höherer y-Koordinaten durchlaufen werden, dass in einer jeweiligen Zeile des Rechteckgitters aufeinanderfolgende Pixel in Richtung höherer x-Koordinaten nacheinander durchlaufen werden,
- wobei für jedes der so durchlaufenen Pixel (P) die folgenden Verfahrensschritte a) bis d) vorgenommen werden, nämlich dass
a) die dem jeweiligen Pixel (P) zugeordneten Farb- und/oder Helligkeitswerte auf das Vorliegen eines vorgegebenen Kriteriums, nämlich auf die Überschreitung oder Unterschreitung eines vorgegebenen Schwellenwerts (T), überprüft werden,
b) bei Vorliegen dieses Kriteriums eine das jeweilige Pixel (P) umgebende Umgebung (U) einer vorgegebenen Größe und Form bestimmt wird, wobei Pixel nur dann der Umgebung (U) als Umgebungspixel (Pᵤ) hinzugefügt werden, wenn diese Umgebungspixel (Pᵤ) bereits auf markierte Pixel (P) in ihrer Umgebung (U) überprüft worden sind,
c) der Umgebung (U) des jeweiligen Pixels (P) zumindest ein Umgebungspixel (Pᵤ) zugewiesen wird, wobei sich zumindest einer der Koordinatenwerte (x, y) des Umgebungspixels (Pᵤ) vom jeweiligen Koordinatenwert (x, y) des Pixels (P) um zumindest zwei Pixelabmessungen unterscheidet, und
d) innerhalb der Umgebung (U) nach bereits markierten Umgebungspixeln (Pᵤ) gesucht wird, und bei Vorliegen einer Mindestanzahl von markierten Umgebungspixeln (Pᵤ) mit derselben Markierung (M₁..Mₙ) innerhalb der Umgebung (U), insbesondere von zumindest einem markierten Umgebungspixel (Pᵤ), dem jeweiligen Pixel (P) dieselbe Markierung (M₁..Mₙ) zugewiesen wird, andernfalls dem jeweiligen Pixel (P) eine neue, noch nicht vergebene Markierung (M₁..Mₙ) zugewiesen wird, und
- anschließend nach dem Durchlauf der Pixel (P) diejenigen Mengen von Pixeln (P), denen jeweils dieselbe Markierung (M_{1..} Mₙ) zugewiesen ist, als Bildmerkmale (F) angesehen werden.

2. Verfahren nach Anspruch 1, **dadurch gekennzeichnet, dass** für den Fall, dass innerhalb der Umgebung (U) des jeweiligen Pixels (P) mehrere markierte Umgebungspixel (Pᵤ) mit unterschiedlichen Markierungen (M_{1..} Mₙ) aufgefunden werden, die jeweiligen Markierungen (M_{1..} Mₙ) als einander gleichwertig angesehen werden und die jeweiligen Pixel mit diesen Markierungen demselben Merkmal zugerechnet werden.

3. Verfahren nach einem der vorangehenden Ansprüche, **dadurch gekennzeichnet, dass** die jeweilige Umgebung (U) aus einer Anzahl von relativ zum jeweiligen Pixel (P) festgelegten Teilumgebungen (U₁, ..., U₄) zusammengesetzt wird, sofern die durch die Teilumgebungen (U₁, ..., U₄) festgelegten Umgebungspixel (Pᵤ) innerhalb des Digitalbilds (I) liegen, wobei insbesondere außerhalb des Digitalbilds (I) liegende Umgebungspixel (Pᵤ) nicht der jeweiligen Teilumgebung (U₁, ..., U₄) zugerechnet werden.

4. Verfahren nach Anspruch 3, **dadurch gekennzeichnet, dass** die einzelnen Teilumgebungen (U₁, ..., U₄) des jeweiligen Pixels (P) in einer vorgegebenen und für sämtliche Pixel (P) gleichen Reihenfolge oder nach derselben Maßgabe auf das Vorliegen von markierten Pixeln (P) durchsucht werden.

5. Verfahren nach einem der Ansprüche 3 oder 4, **dadurch gekennzeichnet, dass** die Umgebung (U) eines Pixels (P) jeweils die folgenden Teilumgebungen (U₁, ..., U₄) aufweist, die unter Zugrundelegung einer ersten und einer zweiten vorgegebenen Umgebungslänge (dxu, dyu) wie folgt festgelegt werden:
a) eine erste Teilumgebung (U₁), die sämtliche Umgebungspixel (Pᵤ) aufweist, deren zweiter Koordinatenwert (y) dem zweiten Koordinatenwert (y) des jeweiligen Pixels (P) entspricht und deren erster Koordinatenwert (x) kleiner, höchstens jedoch um die vorgegebene erste Umgebungslänge (dxu) kleiner ist als der erste Koordinatenwert (x) des jeweiligen Pixels (P),
b) eine zweite Teilumgebung (U₂), die sämtliche Umgebungspixel (Pᵤ) aufweist, deren erster Koordinatenwert (x) kleiner, höchstens jedoch um eine vorgegebene erste Umgebungslänge (dxu) kleiner ist als der erste Koordinatenwert (x) des jeweiligen Pixels (P), und deren zweiter Koordinatenwert (y) kleiner, höchstens jedoch um die vorgegebene zweite Umgebungslänge (dyu) kleiner ist als der zweite Koordinatenwert (y) des jeweiligen Pixels (P),
c) eine dritte Teilumgebung (U₃), die sämtliche Umgebungspixel (Pᵤ) aufweist, deren erster Koordinatenwert (x) dem ersten Koordinatenwert (x) des jeweiligen Pixels (P) entspricht und deren zweiter Koordinatenwert (y) kleiner, höchstens jedoch um eine vorgegebene zweite Umgebungslänge (dyu) kleiner ist als der zweite Koordinatenwert (y) des jeweiligen Pixels (P), und
d) eine vierte Teilumgebung (U₄), die sämtliche Umgebungspixel (Pᵤ) aufweist, deren erster Koordinatenwert (x) größer, höchstens jedoch um eine vorgegebene erste Umgebungslänge (dxu) größer ist als der erste Koordinatenwert (x) des jeweiligen Pixels (P), und deren zweiter Koordinatenwert (y) kleiner, höchstens jedoch um eine vorgegebene zweite Umgebungslänge (dyu) kleiner ist als der zweite Koordinatenwert (y) des jeweiligen Pixels (P).

6. Verfahren nach Anspruch 5, **dadurch gekennzeichnet, dass** die erste Umgebungslänge (dxu) und/oder zweite Umgebungslänge (dyu) jeweils eine Länge von drei bis 20, insbesondere 5 bis 11, Pixelbreiten aufweisen, und/oder
dass die erste Umgebungslänge (dxu) und zweite Umgebungslänge (dyu) gleich groß sind.

7. Verfahren nach einem der Ansprüche 5 oder 6, **dadurch gekennzeichnet, dass** die einzelnen Teilumgebungen (U₁, ..., U₄) in der folgenden Reihenfolge auf das Vorhandensein von bereits markierten Pixeln (P) untersucht werden, wobei
a) zunächst die dritte Teilumgebung (U₃) auf das Vorhandensein markierter Umgebungspixel (Pᵤ) durchsucht wird und sofern in der dritten Teilumgebung (U₃) ein markiertes Umgebungspixel (Pᵤ) gefunden wird, die Markierung des markierten Umgebungspixels (U₃) auf das jeweilige Pixel (P) übernommen wird, andernfalls
b) die erste Teilumgebung (U₁) auf das Vorhandensein markierter Umgebungspixel (Pᵤ) durchsucht wird und sofern in der ersten Teilumgebung (U₁) ein markiertes Umgebungspixel (Pᵤ) gefunden wird,
b1) die vierte Teilumgebung (U₄) auf das Vorhandensein markierter Umgebungspixel (Pᵤ) durchsucht wird und sofern in der vierten Teilumgebung (U₄) ein markiertes Umgebungspixel (Pᵤ) gefunden wird, die Markierung des markierten Umgebungspixels (Pᵤ) in der ersten oder vierten Teilumgebung (U₁, U₄) auf das jeweilige Pixel (P) übernommen wird und die Markierungen des in der ersten Teilumgebung (U₁) aufgefundenen markierten Umgebungspixels (Pᵤ) und des in der vierten Teilumgebung (U₄) aufgefundenen markierten Umgebungspixels (Pᵤ) aus gleichwertig angesehen werden,
sofern hingegen in der vierten Teilumgebung (U₄) kein markiertes Umgebungspixel (Pᵤ) aufgefunden werden konnte, die Markierung des markierten Umgebungspixels (Pᵤ) in der ersten Teilumgebung (U₁) auf das jeweilige Pixel (P) übernommen wird,
c) sofern hingegen in der ersten Teilumgebung (U₁) kein markiertes Umgebungspixel (Pᵤ) gefunden wird, die zweite Teilumgebung (U₂) auf das Vorhandensein markierter Umgebungspixel (Pᵤ) durchsucht wird und sofern in der zweiten Teilumgebung (U₂) ein markiertes Umgebungspixel (Pᵤ) gefunden wird,
c1) die vierte Teilumgebung (U₄) auf das Vorhandensein markierter Umgebungspixel (Pᵤ) durchsucht wird und sofern in der vierten Teilumgebung (U₄) ein markiertes Umgebungspixel (Pᵤ) gefunden wird, die Markierung des markierten Umgebungspixels (Pᵤ) in der zweiten oder vierten Teilumgebung (U₂, U₄) auf das jeweilige Pixel (P) übernommen wird und die Markierungen des in der zweiten Teilumgebung (U₂) aufgefundenen markierten Umgebungspixels (Pᵤ) und des in der vierten Teilumgebung (U₄) aufgefundenen markierten Umgebungspixels (Pᵤ) aus gleichwertig angesehen werden,
sofern hingegen in der vierten Teilumgebung (U₄) kein markiertes Umgebungspixel (Pᵤ) aufgefunden werden konnte, die Markierung des markierten Umgebungspixels (Pᵤ) in der zweiten Teilumgebung (U₂) auf das jeweilige Pixel (P) übernommen wird,
d) sofern hingegen in der zweiten Teilumgebung (U₂) kein markiertes Umgebungspixel (Pᵤ) gefunden wird, die vierte Teilumgebung (U₄) auf das Vorhandensein markierter Umgebungspixel (Pᵤ) durchsucht wird und sofern in der vierten Teilumgebung (U₄) ein markiertes Umgebungspixel (Pᵤ) gefunden wird, die Markierung des markierten Umgebungspixels (Pᵤ) in der vierten Teilumgebung (U₄) auf das jeweilige Pixel (P) übernommen wird, andernfalls
e) dem jeweiligen Pixel (P) eine neue, noch nicht für andere Pixel (P) vergebene Markierung zugewiesen wird.

8. Verfahren nach einem der vorangehenden Ansprüche, **dadurch gekennzeichnet, dass** als zu untersuchendes Digitalbild (I) ein Differenzbild zwischen zwei Digitalbildern herangezogen wird.

9. Verfahren nach einem der vorangehenden Ansprüche, **dadurch gekennzeichnet, dass** das Digitalbild (I) für jedes Pixel (P) jeweils nur einen einzigen Helligkeits- oder Farbwert (L) aufweist und dass bei der Überprüfung des Kriteriums verglichen wird, ob dieser Helligkeits- oder Farbwert (L) einen vorgegebenen Schwellenwert (T₁) übersteigt und/oder ob dieser Helligkeits- oder Farbwert (L) einen vorgegebenen weiteren Schwellenwert (T₂) unterschreitet.

10. Datenträger, auf dem ein Programm zur Durchführung eines Verfahrens nach einem der vorangehenden Ansprüche, wenn das Programm auf einem Computer ausgeführt wird, abgespeichert ist.

## Claims

1. A method for identifying spatially extended image features (F) that are not pixelwise contiguous in a two-dimensional digital image (I) to be examined, having pixels (P) arranged in a grid shape in the form of a rectangular grid, wherein each pixel (P) of the two-dimensional digital image (I) is assigned respectively two coordinate values (x, y) in accordance with their position in the rectangular grid of the digital image (I), and the respective coordinate values (x, y) of pixels (P) located next to one another differ in each case by one pixel dimension,
- wherein the individual pixels (P) are run through in the order of a regular scan, in which pixels of consecutive lines of the rectangular grid are run through one after the other in the direction of higher y coordinates, in such a manner that in a respective line of the rectangular grid consecutive pixels are run through one after the other in the direction of higher x coordinates,
- wherein the following method steps a) to d) are carried out for each of the pixels (P) which have been run through in this manner, namely that
a) the color and/or brightness values associated with the respective pixel (P) are checked for the presence of a predetermined criterion, namely for overshooting or undershooting a predetermined threshold value (T),
b) in the presence of this criterion, an environment (U) surrounding the respective pixel (P) of a predetermined size and shape is determined, wherein pixels are only added to the environment (U) as environment pixels (Pᵤ) when these environment pixels (Pᵤ) have already been checked for marked pixels (P) in their environment (U),
c) at least one environment pixel (Pᵤ) is assigned to the environment (U) of the respective pixel (P), wherein at least one of the coordinate values (x, y) of the environment pixel (Pᵤ) differs from the respective coordinate value (x, y) of the pixel (P) by at least two pixel dimensions, and
d) already marked environment pixels (Pᵤ) are searched for within the environment (U), and in the presence of a minimum number of marked environment pixels (Pᵤ) with the same marking (M₁...Mₙ) within the environment (U), in particular of at least one marked environment pixel (Pᵤ), the same marking (M₁...Mₙ) is assigned to the respective pixel (P), otherwise a new, not yet allocated marking (M₁...Mₙ) is assigned to the respective pixel (P), and
- subsequently, after the run-through of the pixels (P), those quantities of pixels (P) which have respectively been assigned the same marking (M₁...Mₙ) are regarded as image features (F).

2. The method according to claim 1, **characterized in that** in the case that within the environment (U) of the respective pixel (P) several marked environment pixels (Pᵤ) having different markings (M₁...Mₙ) are found, the respective markings (M₁...Mₙ) are regarded as being equivalent to one another and the respective pixels with these markings are ascribed to the same feature.

3. The method according to any of the preceding claims, **characterized in that** the respective environment (U) is composed of a number of partial environments (U₁, ..., U₄) defined relative to the respective pixel (P), if the environment pixels (Pᵤ) defined by the partial environments (U₁, ..., U₄) are located within the digital image (I), wherein in particular environment pixels (Pᵤ) located outside the digital image (I) are not ascribed to the respective partial environment (U₁, ..., U₄).

4. The method according to claim 3, **characterized in that** the individual partial environments (U₁, ..., U₄) of the respective pixel (P) are searched for the presence of marked pixels (P) in an order that is predetermined and identical for all the pixels (P) or according to the same proviso.

5. The method according to one of claims 3 or 4, **characterized in that** the environment (U) of a pixel (P) in each case has the following partial environments (U₁,..., U₄) which are defined as follows on the basis of a first and a second predetermined environment length (dxu, dyu):
a) a first partial environment (U₁) having all the environment pixels (Pᵤ) the second coordinate value (y) of which corresponds to the second coordinate value (y) of the respective pixel (P) and the first coordinate value (x) of which is smaller than the first coordinate value (x) of the respective pixel (P), but is smaller at most by the predetermined first environment length (dxu),
b) a second partial environment (U₂) having all the environment pixels (Pᵤ) the first coordinate value (x) of which is smaller than the first coordinate value (x) of the respective pixel (P), but is smaller at most by a predetermined first environment length (dxu), and the second coordinate value (y) of which is smaller than the second coordinate value (y) of the respective pixel (P), but is smaller at most by the predetermined second environment length (dyu),
c) a third partial environment (U₃) having all the environment pixels (Pᵤ) the first coordinate value (x) of which corresponds to the first coordinate value (x) of the respective pixel (P) and the second coordinate value (y) of which is smaller than the second coordinate value (y) of the respective pixel (P), but is smaller at most by a predetermined second environment length (dyu), and
d) a fourth partial environment (U₄) having all the environment pixels (Pᵤ) the first coordinate value (x) of which is greater than the first coordinate value (x) of the respective pixel (P), but is greater at most by a predetermined first environment length (dxu), and the second coordinate value (y) of which is smaller than the second coordinate value (y) of the respective pixel (P), but is smaller at most by a predetermined second environment length (dyu).

6. The method according to claim 5, **characterized in that** the first environment length (dxu) and/or second environment length (dyu) each have a length of three to 20, in particular 5 to 11, pixel widths, and/or that the first environment length (dxu) and the second environment length (dyu) are of equal size.

7. The method according to one of claims 5 or 6, **characterized in that** the individual partial environments (U₁, ..., U₄) are examined for the presence of already marked pixels (P) in the following order, wherein
a) first the third partial environment (U₃) is checked for the presence of marked environment pixels (Pᵤ) and, if a marked environment pixel (Pᵤ) is found in the third partial environment (U₃), the marking of the marked environment pixel (U₃) is adopted for the respective pixel (P); otherwise
b) the first partial environment (U₁) is searched for the presence of marked environment pixels (Pᵤ) and, if a marked environment pixel (Pᵤ) is found in the first partial environment (U₁),
b1) the fourth partial environment (U₄) is searched for the presence of marked environment pixels (Pᵤ) and, if a marked environment pixel (Pᵤ) is found in the fourth partial environment (U4), the marking of the marked environment pixel (Pᵤ) in the first or fourth partial environment (U₁, ..., U₄) is adopted for the respective pixel (P), and the markings of the marked environment pixel (Pᵤ) found in the first partial environment (U₁) and of the marked environment pixel (Pᵤ) found in the fourth partial environment (U₄) are regarded as being equivalent;
if, in contrast, no marked environment pixel (Pᵤ) could be found in the fourth partial environment (U₄), the marking of the marked environment pixel (Pᵤ) in the first partial environment (U₁) is adopted for the respective pixel (P),
c) if, in contrast, no marked environment pixel (Pᵤ) is found in the first partial environment (U₁), the second partial environment (U₂) is searched for the presence of marked environment pixels (Pu) and, if a marked environment pixel (Pᵤ) is found in the second partial environment (U₂),
c1) the fourth partial environment (U₄) is searched for the presence of marked environment pixels (Pᵤ) and, if a marked environment pixel (Pᵤ) is found in the fourth partial environment (U₄), the marking of the marked environment pixel (Pᵤ) in the second or fourth partial environment (U₂, U₄) is adopted for the respective pixel (P), and the markings of the marked environment pixel (Pᵤ) found in the second partial environment (U₂) and of the marked environment pixel (Pᵤ) found in the fourth partial environment (U₄) are regarded as being equivalent;
if, in contrast, no marked environment pixel (Pᵤ) could be found in the fourth partial environment (U₄), the marking of the marked environment pixel (Pᵤ) in the second partial environment (U₂) is adopted for the respective pixel (P),
d) if, in contrast, no marked environment pixel (Pᵤ) is found in the second partial environment (U₂), the fourth partial environment (U₄) is searched for the presence of marked environment pixels (Pᵤ) and, if a marked environment pixel (Pᵤ) is found in the fourth partial environment (U₄), the marking of the marked environment pixel (Pᵤ) in the fourth partial environment (U₄) is adopted for the respective pixel (P), otherwise
e) a new marking not yet allocated to other pixels (P) is assigned to the respective pixel (P).

8. The method according to any of the preceding claims, **characterized in that** as the digital image (I) to be examined a difference image between two digital images is employed.

9. The method according to any of the preceding claims, **characterized in that** the digital image (I) has respectively only one single brightness or color value (L) for each pixel (P), and that it is compared during the check of the criterion whether this brightness or color value (L) overshoots a predetermined threshold value (T₁) and/or whether this brightness or color value (L) undershoots a predetermined further threshold value (T₂).

10. A data carrier on which a program is stored for carrying out a method according to any of the preceding claims, when the program is executed on a computer.

## Revendications

1. Procédé d'identification de caractéristiques d'image (F) spatialement étendues et à pixels non contigus dans une image numérique (I) bidimensionnelle à examiner comprenant des pixels (P) agencés en trame sous forme d'une grille rectangulaire, cependant que, à chaque pixel (P) de l'image numérique bidimensionnelle (I), respectivement deux valeurs de coordonnées (x, y) sont affectées en fonction de leur position dans la grille rectangulaire de l'image numérique (I), et que les valeurs de coordonnées respectives (x, y) de pixels (P) juxtaposés se différencient respectivement d'une dimension de pixel,
- cependant que les pixels (P) individuels sont parcourus dans l'ordre d'un scannage régulier lors duquel, les uns après les autres, des pixels de lignes se succédant de la grille rectangulaire sont parcourus de telle manière en direction de coordonnées y plus élevées que, dans une ligne respective de la grille rectangulaire, des pixels se succédant sont parcourus les uns après les autres en direction de coordonnées x plus élevées,
- cependant que, pour chacun des pixels (P) ainsi parcourus, les étapes de procédé suivantes de a) à d) sont effectuées, à savoir que
a) les valeurs de couleur et/ou de luminosité attribuées au pixel (P) respectif sont examinées pour discerner si un critère prédéfini est réalisé, à savoir le dépassement ou le sous-dépassement d'une valeur seuil (T) prédéfinie,
b) en cas de réalisation de ce critère, un environnement (U) d'une taille et d'une forme prédéfinies entourant le pixel (P) respectif est déterminé, cependant que des pixels ne sont ajoutés à l'environnement (U) en tant que pixels d'environnement (Pᵤ) que quand ces pixels d'environnement (Pᵤ) ont déjà été examinés pour discerner la présence de pixels (P) marqués dans leur environnement (U),
c) à l'environnement (U) du pixel (P) respectif, au moins un pixel d'environnement (Pᵤ) est affecté, cependant qu'au moins une des valeurs de coordonnées (x, y) du pixel d'environnement (Pᵤ) se différencie d'au moins deux dimensions de pixel de la valeur de coordonnées respective (x, y) du pixel (P), et
d) à l'intérieur de l'environnement (U), une recherche de pixels d'environnement (Pᵤ) déjà marqués est effectuée, et, s'il y a un nombre minimum de pixels d'environnement (Pᵤ) marqués ayant le même marquage (M₁.. Mₙ) à l'intérieur de l'environnement (U), en particulier d'au moins un pixel d'environnement (Pᵤ) marqué, le même marquage (M₁.. Mₙ) est affecté au pixel (P) respectif, alors que, autrement, un nouveau marquage (M1...Mn) non encore octroyé est affecté au pixel (P) respectif, et
- ensuite, après le parcours des pixels (P), les quantité de pixels (P) auxquelles respectivement le même marquage (M₁.. Mₙ) est affecté sont considérées comme caractéristiques d'image (F).

2. Procédé selon la revendication 1, **caractérisé en ce que**, dans le cas où, à l'intérieur de l'environnement (U) du pixel (P) respectif, plusieurs pixels d'environnement (Pᵤ) marqués présentant des marquages différents (M₁.. Mₙ) sont trouvés, les marquages (M₁.. Mₙ) respectifs sont considérés comme équivalents entre eux, et les pixels respectifs présentant ces marquages sont imputés à la même caractéristique.

3. Procédé selon une des revendications précédentes, **caractérisé en ce que** l'environnement (U) respectif est composé d'un certain nombre d'environnements partiels (U₁, ..., U₄) définis relativement au pixel (P) respectif, dans la mesure où les pixels d'environnement (Pᵤ) définis par les environnements partiels (U₁, ..., U₄) se trouvent à l'intérieur de l'image numérique (I), cependant qu'en particulier les pixels d'environnement (Pᵤ) se trouvant à l'extérieur de l'image numérique (I) ne sont pas imputés à l'environnement partiel (U₁, ..., U₄) respectif.

4. Procédé selon la revendication 3, **caractérisé en ce que** c'est dans un ordre prédéfini et identique pour tous les pixels (P) ou sous la même condition que les environnements partiels (U₁, ..., U₄) individuels du pixel respectif (P) sont scrutés à la recherche de pixels (P) marqués.

5. Procédé selon une des revendications de 3 ou 4, **caractérisé en ce que** l'environnement (U) d'un pixel (P) comporte respectivement les environnements partiels (U₁, ..., U₄) suivants qui, en prenant pour base une première et une deuxième longueur d'environnement (dxu, dyu) prédéfinie, sont définis comme suit :
a) un premier environnement partiel (U₁) qui comporte la totalité des pixels d'environnement (Pᵤ) dont la deuxième valeur de coordonnées (y) correspond à la deuxième valeur de coordonnées (y) du pixel respectif (P) et dont la première valeur de coordonnées (x) est inférieure, toutefois au maximum inférieure de la première longueur d'environnement (dxu) prédéfinie, à la première valeur de coordonnées (x) du pixel respectif (P),
b) un deuxième environnement partiel (U₂) qui comporte la totalité des pixels d'environnement (Pᵤ) dont la première valeur de coordonnées (x) est inférieure, toutefois au maximum inférieure d'une première longueur d'environnement (dxu) prédéfinie, à la première valeur de coordonnées (x) du pixel respectif (P), et dont la deuxième valeur de coordonnées (y) est inférieure, toutefois au maximum inférieure de la deuxième longueur d'environnement (dyu) prédéfinie, à la deuxième valeur de coordonnées (y) du pixel respectif (P),
c) un troisième environnement partiel (U₃) qui comporte la totalité des pixels d'environnement (Pᵤ) dont la première valeur de coordonnées (x) correspond à la première valeur de coordonnées (x) du pixel respectif (P) et dont la deuxième valeur de coordonnées (y) est inférieure, toutefois au maximum inférieure d'une deuxième longueur d'environnement (dyu) prédéfinie, à la deuxième valeur de coordonnées (y) du pixel respectif (P), et
d) un quatrième environnement partiel (U₄) qui comporte la totalité des pixels d'environnement (Pᵤ) dont la première valeur de coordonnées (x) est supérieure, toutefois au maximum supérieure d'une première longueur d'environnement (dxu) prédéfinie, à la première valeur de coordonnées (x) du pixel respectif (P), et dont la deuxième valeur de coordonnées (y) est inférieure, toutefois au maximum inférieure d'une deuxième longueur d'environnement (dyu) prédéfinie, à la deuxième valeur de coordonnées (y) du pixel respectif (P).

6. Procédé selon la revendication 5, **caractérisé en ce que** la première longueur d'environnement (dxu) et/ou la deuxième longueur d'environnement (dyu) présentent respectivement une longueur de trois à 20, en particulier de 5 à 11 largeurs de pixel, et/ou **en ce que** la première longueur d'environnement (dxu) et la deuxième longueur d'environnement (dyu) sont égales.

7. Procédé selon une des revendications 5 ou 6, **caractérisé en ce que** les environnements partiels (U₁, ..., U₄) individuels sont examinés dans l'ordre suivant pour discerner la présence de pixels (P) déjà marqués, cependant que
a) tout d'abord, le troisième environnement partiel (U₃) est scruté pour discerner la présence de pixels d'environnement (Pᵤ) marqués, et, dans la mesure où, dans le troisième environnement partiel (U₃), un pixel d'environnement (Pᵤ) marqué est trouvé, le marquage du pixel d'environnement (U₃) marqué est adopté pour le pixel (P) respectif, et qu'autrement
b) le premier environnement partiel (U₁) est scruté pour discerner la présence de pixels d'environnement (Pᵤ) marqués, et, dans la mesure où, dans le premier environnement partiel (U₁), un pixel d'environnement (Pᵤ) marqué est trouvé,
b1) le quatrième environnement partiel (U₄) est scruté pour discerner la présence de pixels d'environnement (Pᵤ) marqués, et, dans la mesure où, dans le quatrième environnement partiel (U₄), un pixel d'environnement (Pᵤ) marqué est trouvé, le marquage du pixel d'environnement (Pᵤ) marqué dans le premier ou quatrième environnement partiel (U₁, U₄) est adopté pour le pixel (P) respectif, et les marquages du pixel d'environnement (Pᵤ) marqué trouvé dans le premier environnement partiel (U₁) et du pixel d'environnement (Pᵤ) marqué trouvé dans le quatrième environnement partiel (U₄) sont considérés comme équivalents,
dans la mesure par contre, où, dans le quatrième environnement partiel (U₄), aucun pixel d'environnement (Pᵤ) marqué n'a pu être trouvé, le marquage du pixel d'environnement (Pᵤ) marqué dans le premier environnement partiel (U₁) est adopté pour le pixel (P) respectif,
c) dans la mesure par contre, où, dans le premier environnement partiel (U₁), aucun pixel d'environnement (Pᵤ) marqué n'est trouvé, le deuxième environnement partiel (U₂) est scruté pour discerner la présence de pixels d'environnement (Pᵤ) marqués, et, dans la mesure où, dans le deuxième environnement partiel (U₂), un pixel d'environnement (Pᵤ) marqué est trouvé,
cl) le quatrième environnement partiel (U₄) est scruté pour discerner la présence de pixels d'environnement (Pᵤ) marqués, et, dans la mesure où, dans le quatrième environnement partiel (U₄), un pixel d'environnement (Pᵤ) marqué est trouvé, le marquage du pixel d'environnement (Pᵤ) marqué dans le deuxième ou quatrième environnement partiel (U₂, U₄) est adopté pour le pixel (P) respectif, et les marquages du pixel d'environnement (Pᵤ) marqué trouvé dans le deuxième environnement partiel (U₂) et du du pixel d'environnement (Pᵤ) marqué trouvé dans le quatrième environnement partiel (U₄) sont considérés comme équivalents,
dans la mesure par contre, où, dans le quatrième environnement partiel (U₄), aucun pixel d'environnement (Pᵤ) marqué n'a pu être trouvé, le marquage du pixel d'environnement (Pᵤ) marqué dans le deuxième environnement partiel (U₂) est adopté pour le pixel (P) respectif,
d) dans la mesure par contre, où, dans le deuxième environnement partiel (U₂), aucun pixel d'environnement (Pᵤ) marqué n'est trouvé, le quatrième environnement partiel (U₄) est scruté pour discerner la présence de pixels d'environnement (Pᵤ) marqués, et, dans la mesure où, dans le quatrième environnement partiel (U₄), un pixel d'environnement (Pᵤ) marqué est trouvé, le marquage du pixel d'environnement (Pᵤ) marqué dans le quatrième environnement partiel (U₄) est adopté pour le pixel (P) respectif,
et qu'autrement
e) au pixel (P) respectif, un nouveau marquage non encore octroyé à d'autres pixels (P) est affecté.

8. Procédé selon une des revendications précédentes, **caractérisé en ce que**, comme image numérique (I) à examiner, c'est une image différentielle entre deux images numériques qui fait l'objet de l'examen.

9. Procédé selon une des revendications précédentes, **caractérisé en ce que** l'image numérique (I) comprend pour chaque pixel (P) seulement une seule valeur de luminosité ou de couleur (L), et **en ce que**, lors de l'examen portant sur le critère, il est comparé si cette valeur de luminosité ou de couleur (L) dépasse une valeur seuil (T₁) prédéfinie et/ou si cette valeur de luminosité ou de couleur (L) sous-dépasse une autre valeur seuil (T₂) prédéfinie.

10. Support de données sur lequel un programme de réalisation d'un procédé selon une des revendications précédentes est mémorisé quand le programme est exécuté sur un ordinateur.
